# DEMANDE DE BREVET EUROPEEN

(11) **EP 4 246 928 A1**
(43) Date de publication de la demande: **20.09.2023**
(21) Numéro de dépôt: 23161595.6
(22) Date de dépôt: 13.03.2023
(51) Int. Cl.: H04L 65/1046, H04L 65/1016, H04L 65/1073

(54) **PROCÉDÉ D'INITIATION DE COMMUNICATION MCDATA AU SEIN D'UN REGROUPEMENT DE GROUPES DE COMMUNICATION DANS UN RÉSEAU 3GPP MCS**

(30) Priorité: 14.03.2022 FR 2202210
(71) Demandeur: Airbus DS SLC, 78990 Elancourt (FR)
(72) Inventeur: Paterour, Olivier, Elancourt (FR); Piroard, François, Elancourt (FR)
(74) Mandataire: Cabinet Camus Lebkiri

(57) **Abrégé**

Un aspect de l'invention concerne un procédé d'initiation d'une communication MCData au sein d'un regroupement de groupes de communication, le procédé étant mis en oeuvre par un réseau selon le standard 3GPP MCS, une communication MCData pouvant comprendre des messages de données courtes ou une distribution de fichier. En outre, certaines informations sont ajoutées dans les différentes transmissions afin de permettre des vérifications supplémentaires par les différentes entités.

## Description

### DOMAINE TECHNIQUE DE L'INVENTION

Le domaine technique de l'invention est celui des télécommunications.

La présente invention concerne un procédé d'initiation de communication MCData au sein d'un regroupement de groupes de communication dans un réseau 3GPP MCS.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en oeuvre de réseaux professionnels sécurisés. Ces réseaux à bande étroite sont des réseaux nationaux ou locaux : ils sont implémentés par exemple au sein d'une organisation telle qu'une entreprise, au sein d'un pays par exemple pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services » permet ces échanges sécurisés en large bande.

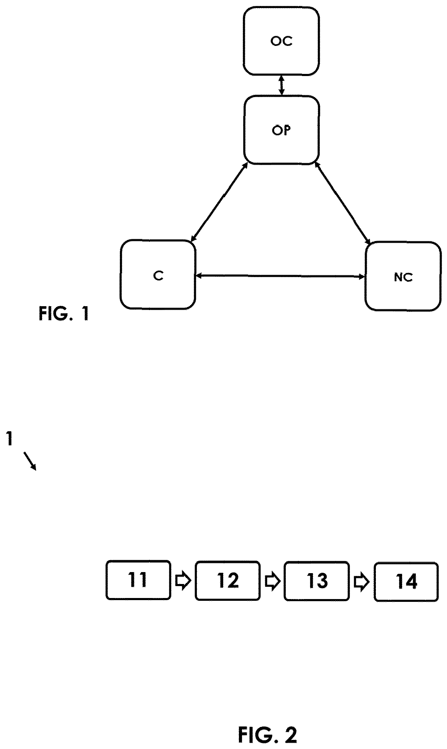

Un tel réseau est par exemple représenté à la Figure 1. Ce réseau comprend un client originel OC (pour « Originating Client » selon la dénomination du 3GPP MCS en anglais) connecté à un serveur participant originel OP (pour « Originating Participating » selon la dénomination du 3GPP MCS en anglais). Le serveur participant OP peut communiquer avec d'autres serveurs du réseau. A la Figure 1, le serveur participant OP peut communiquer avec un serveur Contrôleur C (pour « Controlling » selon la dénomination du 3GPP MCS en anglais) et avec un serveur Non-Contrôleur (pour « Non Controlling » selon la dénomination du 3GPP MCS en anglais). Les serveurs participant OP, contrôleur C et non-contrôleur NC sont des serveurs de type « MCX servers » tels que définis dans le 3GPP MCS.

Le serveur Non-Contrôleur NC et le serveur Contrôleur C peuvent aussi communiquer entre eux. Le serveur participant OP est un serveur qui a en charge la gestion du client originel OC. Le serveur Contrôleur C a en charge la gestion d'un groupe de communications au sein duquel le client originel OC souhaite communiquer. Le serveur Non-Contrôleur NC peut être vu comme un sous-serveur du groupe de communications au sein duquel le client originel OC souhaite communiquer et a en charge la gestion d'un des groupes « constituant » d'un regroupement de groupes de communication.

On entend par « réseau de communication selon le standard 3GPP MCS », un réseau de communication compatible avec le standard 3GPP MCS et plus particulièrement avec la version actuelle du 3GPP qui est la version 17, avec les versions précédentes à partir de la version 13 et avec les versions suivantes intégrant toutes les caractéristiques de l'invention.

Dans le standard 3GPP MCS, les services de communication suivants sont définis :
- MCPTT, de l'anglais « Mission Critical Push To Talk » pour « Appuyer Pour Parler en Mission Critique » en français, qui permet de réaliser des communications voix,
- MCVideo, qui permet de réaliser des communications vidéo,
- MCData, qui comprend trois sous-services :
   - SDS de l'anglais « Short Data Service » pour « Service de données courtes » en français et
   - FD de l'anglais « File Distribution » pour « Distribution de fichier » en français,
   - IPCon de l'anglais « IP Connectivity » pour « Connectivité IP » en français.

Par la suite, on entendra par « communication MCData » toute transmission de données courtes et/ou de fichier régie par le service MCData, par opposition à des transmissions de voix MCPTT ou de vidéo MCVideo. Ces communications MCData sont réalisées, dans le cas d'une transmission sur le plan de signalisation, par des requêtes SIP MESSAGE, ou établies, dans le cas de transmission au sein d'une session établie sur le plan utilisateur, par des requêtes SIP INVITE. SIP est un protocole d'initiation de session (« Session Initiation Protocol » en anglais). Le message SIP INVITE, défini par la RFC 3261, est un message d'invitation d'un autre client à participer à une session. Ces communications peuvent aussi être de type « IPCon ».

Dans le standard 3GPP MCS et dans l'état de l'art, il n'existe actuellement pas de procédure lorsque le client originel OC souhaite initier une communication MCData, c'est-à-dire un envoi de données courtes et/ou de fichier, dans un groupe global GA regroupant un groupe de communication G1 auquel le client OC appartient et un groupe de communication G2 auquel le client OC n'appartient pas nécessairement. Cette procédure n'existe ni pour un système MCData seul, ni pour des systèmes MCData interconnectés.

Une telle procédure existe pour les communications MCVideo et MCPTT, mais n'est pas définie pour les communications MCData.

Il existe donc un besoin de pouvoir initier une communication MCData dans un groupe regroupant un groupe de communication auquel le client appartient et un groupe de communication auquel le client OC n'appartient pas nécessairement.

### RESUME DE L'INVENTION

L'invention offre une solution aux problèmes évoqués précédemment, en permettant à une entité d'initier une communication MCData au sein d'un regroupement de groupes de communication.

Un aspect de l'invention concerne un procédé d'initiation, par une première entité cliente, d'une communication « MCData » de données courtes ou de distribution de fichier au sein d'un groupe global de communication regroupant au moins un premier groupe de communication et au moins un deuxième groupe de communication, au moins une deuxième entité cliente étant affiliée au deuxième groupe de communication, le procédé étant mis en oeuvre dans un réseau de communication selon le standard 3GPP MCS « 3rd Generation Partnership Program Mission-Critical System », le réseau comprenant au moins :
- la première entité cliente affiliée au premier groupe de communication,
- un serveur participant originel gérant la première entité cliente au sein du premier groupe de communication,
- un serveur contrôleur étant en charge de la gestion du groupe global de communication,
- au moins un premier serveur non-contrôleur du groupe global de communication étant en charge de la gestion du premier groupe de communication,
- au moins un deuxième serveur non-contrôleur du groupe global de communication étant en charge de la gestion du deuxième groupe de communication,
le procédé comprenant les étapes de :
- Transmission, par la première entité cliente au serveur participant, d'une première requête selon le protocole d'initiation de session SIP, la première requête comprenant :
   - au moins un champ d'en-tête comprenant une information de groupe constituant, l'information de groupe constituant identifiant le premier groupe de communication, et
   - au moins un champ d'en-tête comprenant une information de groupe appelé, l'information de groupe appelé identifiant le groupe global de communication,
- Transmission, par le serveur participant au premier serveur contrôleur, d'une deuxième requête comprenant les mêmes champs d'en-tête que la première requête et comprenant en outre au moins un champ d'en-tête comprenant l'information d'utilisateur originel, l'information d'utilisateur originel comprenant un identifiant de la première entité cliente,
- Identification, par le serveur contrôleur, des groupes de communication constituant le groupe global de communication à partir de l'information de groupe appelé,
- Invitation, par le serveur contrôleur du groupe global de communication, de chaque entité cliente de chaque groupe constituant le groupe global de communication à participer à la communication.

Grâce à l'invention, un procédé d'initiation de communication MCData au sein d'un regroupement de groupes de communication est proposé, ce procédé étant conforme aux principes de répartition des fonctions entre les rôles des serveurs Participant « Participating », Non-Contrôleur « Non-Controlling » et Contrôleur « Controlling » utilisés par ailleurs dans les spécifications 3GPP MCX, notamment dans la spécification technique MCPTT TS 24.379.

Le premier mode de réalisation de l'invention permet d'autoriser les requêtes émises par tout utilisateur membre d'un des groupes constituant (non nécessairement affilié) du groupe global de regroupement et de distribuer la requête à tous les membres des groupes constituants (non nécessairement affiliés) du groupe global de regroupement.

Le deuxième mode de réalisation de l'invention offre la possibilité supplémentaire d'autoriser seulement les requêtes d'initiation de communication MCData émises par un utilisateur affilié à un des groupes constituants du regroupement de groupe. Le procédé selon l'invention permet aussi de distribuer la requête seulement aux utilisateurs affiliés à un des groupes constituants du regroupement de groupe, grâce à une vérification au niveau du serveur non-contrôleur NC.

Outre les caractéristiques qui viennent d'être évoquées dans le paragraphe précédent, le procédé d'initiation de communication selon un aspect de l'invention peut présenter une ou plusieurs caractéristiques complémentaires parmi les suivantes, considérées individuellement ou selon toutes les combinaisons techniquement possibles :
- l'invitation par le serveur contrôleur du groupe global de communication de chaque entité cliente de chaque groupe constituant le groupe global de communication à participer à la communication comprend l'envoi d'une requête selon le protocole d'initiation de session « SIP » à chaque serveur non-contrôleur identifié de chaque groupe de communication identifié constituant le groupe global de communication, la requête comprenant :
   - au moins un champ d'en-tête comprenant une information d'utilisateur originel, l'information d'utilisateur originel comprenant un identifiant de la première entité cliente,
   - au moins un champ d'en-tête comprenant l'information de groupe constituant,
   - au moins un champ d'en-tête comprenant l'information de groupe appelé.
- Le procédé comprend en outre une étape de transmission, par chaque serveur participant de chaque groupe de communication identifié constituant le groupe global de communication, d'envoi d'une requête à chaque entité cliente affiliée au groupe de communication qu'il a à sa charge, la requête comprenant :
   - au moins un champ d'en-tête comprenant une information d'entité cliente destinataire, l'information d'entité cliente comprenant l'identifiant de l'entité cliente destinataire affiliée au groupe de communication que le serveur non-contrôleur a à sa charge,
   - au moins un champ d'en-tête comprenant l'information d'utilisateur originel,
   - au moins un champ d'en-tête comprenant l'information de groupe constituant,
   - au moins un champ d'en-tête comprenant l'information de groupe appelé.
- la deuxième requête est envoyée par le serveur participant au premier serveur non-contrôleur, le procédé comprenant en outre les étapes de :
   - Vérification, par le premier serveur non-contrôleur, que la première entité cliente est autorisée à initier la communication « MCData » au sein du groupe global de communication à partir de l'information d'utilisateur originel,
   - Si la première entité cliente est autorisée à initier la communication « MCData », transmission, par le premier serveur non-contrôleur au serveur contrôleur, d'une troisième requête identique à la deuxième requête.
- l'étape de vérification se base en outre sur l'information de groupe constituant et sur l'information de groupe appelé.
- l'étape de vérification par le serveur non-contrôleur comprend en outre au moins la vérification que la première entité cliente est bien affiliée au premier groupe de communication à partir de l'information de groupe constituant et de l'information d'utilisateur originel.
- l'étape de vérification par le serveur non-contrôleur comprend en outre au moins la vérification que le premier groupe de communication est compris dans le groupe global de communication à partir de l'information de groupe constituant et de l'information de groupe appelé.
- chaque requête selon le protocole d'initiation de session « SIP » est un message SIP « SIP MESSAGE » ou une invitation SIP « SIP INVITE ».

Un autre aspect de l'invention concerne un réseau de communication selon le standard 3GPP MCS « 3rd Generation Partnership Program Mission-Critical System », le réseau comprenant un groupe global de communication formé par au moins un premier groupe de communication et au moins un deuxième groupe de communication, et :
- une première entité cliente affiliée au premier groupe de communication,
- un serveur participant originel gérant la première entité cliente au sein du premier groupe de communication,
- un serveur contrôleur en charge de la gestion du groupe global de communication,
- au moins un premier serveur non-contrôleur du groupe global de communication compris dans le réseau étant en charge de la gestion du premier groupe de communication,
- au moins un deuxième serveur non-contrôleur du groupe global de communication compris dans le réseau étant en charge de la gestion du deuxième groupe de communication,
le réseau de communication étant configuré pour mettre en oeuvre le procédé d'initiation de communication selon l'une quelconque des revendication précédentes.

Un autre aspect de l'invention concerne un produit programme d'ordinateur comprenant des instructions qui conduisent le réseau selon l'invention à exécuter les étapes du procédé selon l'invention.

Encore un autre aspect de l'invention concerne un support lisible par ordinateur, sur lequel est enregistré le produit programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau selon le standard 3GPP MCS,
- La figure 2 montre une représentation schématique d'un procédé d'initiation de communication MCData au sein d'un regroupement de groupes de communication selon l'invention,
- La figure 3 montre une représentation schématique d'un réseau 3GPP MCS selon l'invention,
- La figure 4 montre une représentation schématique d'un procédé d'initiation de communication MCData selon un premier mode de réalisation de l'invention,
- La figure 5 montre une représentation schématique d'une étape du procédé selon l'invention,
- La figure 6 montre une représentation schématique d'un procédé d'initiation de communication MCData selon un deuxième mode de réalisation de l'invention,
- La figure 7 montre une représentation schématique d'une autre étape du procédé selon l'invention.

### DESCRIPTION DETAILLEE

Sauf précision contraire, un même élément apparaissant sur des figures différentes présente une référence unique.

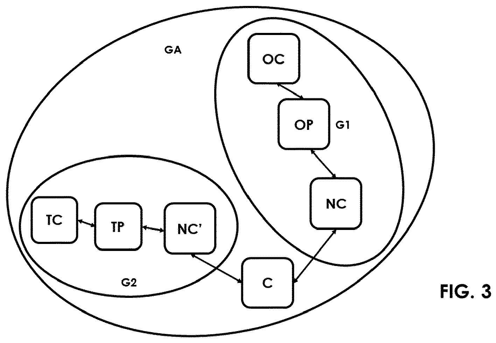

La Figure 2 montre une représentation schématique d'un procédé 1 selon un premier mode de réalisation de l'invention. Le procédé 1 selon un premier mode de réalisation de l'invention est mis en oeuvre par le réseau représenté à la Figure 3.

Le procédé 1 est un procédé d'initiation de communication au sein d'un regroupement de groupes communication.

Le réseau représenté à la Figure 3 configuré pour mettre en oeuvre le procédé selon l'invention est un réseau selon le standard 3GPP MCS, c'est-à-dire qu'il est implémenté en suivant les spécifications définies par le standard 3GPP MCS.

Le réseau de la Figure 3 comprend un groupe global de communication GA regroupant deux groupes de communication G1 et G2. Une entité cliente OC est affiliée au groupe de communication G1. Un serveur participant OP gère l'entité cliente OC au sein du groupe de communication G1 et un serveur non-contrôleur NC du groupe global de communication est en charge de la gestion du groupe de communication G1. Un deuxième serveur non-contrôleur NC' est en charge de la gestion du deuxième groupe de communication G2. Un serveur contrôleur C est en charge de la gestion du groupe global de communication GA. L'invention couvre aussi les variantes dans lesquelles le serveur contrôleur C du groupe global de communication GA est en charge de la gestion du groupe de communication G1 ou de la gestion du groupe de communication G2. Le deuxième serveur non-contrôleur NC' est relié au serveur contrôleur C. Un serveur participant terminal TP est relié au deuxième serveur non-contrôleur NC' et à une deuxième entité cliente terminale TC, le serveur participant terminal TP étant en charge de la gestion de la deuxième entité cliente terminale TC, la deuxième entité cliente terminale TC étant affiliée au groupe de communication G2.

Une entité cliente est un dispositif, préférentiellement un équipement utilisateur (UE) comprenant au moins une mémoire et au moins un processeur, la mémoire comprenant des instructions qui, lorsqu'elles sont exécutées par le processeur, conduisent l'équipement utilisateur à mettre en oeuvre les actions qui lui sont attribuées dans la suite de la description. Préférentiellement, les entités clientes comprennent un dispositif d'affichage, afin d'afficher le contenu MCData échangé, par exemple du texte, une photo, ou tout autre fichier. De la même manière, les différents serveurs, comprenant les serveurs contrôleur, non-contrôleur et participant, sont des dispositifs comprenant au moins une mémoire et au moins un processeur, la mémoire comprenant des instructions qui, lorsqu'elles sont exécutées par le processeur, conduisent le serveur à mettre en oeuvre les actions qui lui sont attribuées dans la suite de la description. Les serveurs et les entités clientes sont reliées entre eux par un réseau tel que celui représenté à la Figure 3, ce réseau mettant en oeuvre des communications filaires, sans fil, ou toute combinaison.

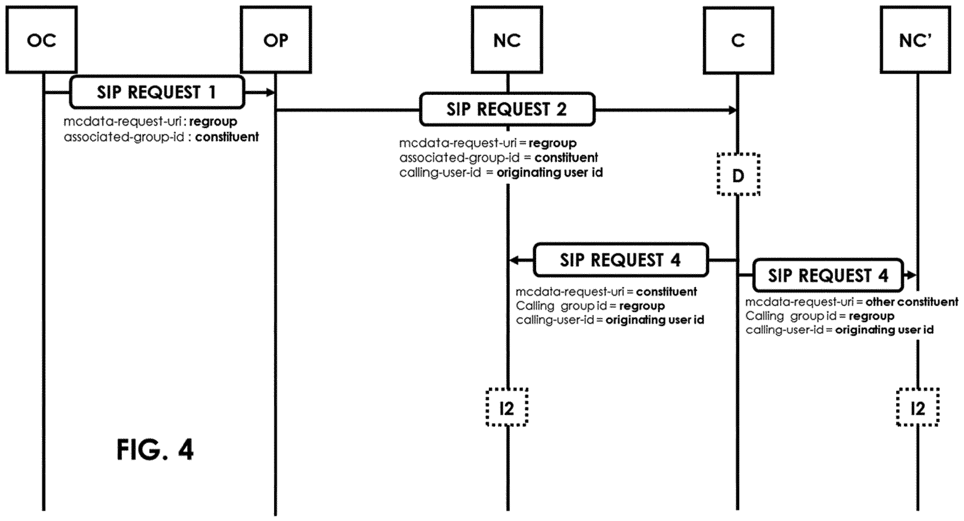

Le procédé 1 selon un premier mode de réalisation de l'invention représenté aux Figures 2 et 4 permet à l'entité cliente originelle OC d'initier une communication MCData au sein du groupe global de communication GA, c'est-à-dire une communication avec au moins une autre entité cliente du groupe global de communication GA, par exemple avec la deuxième entité cliente C' membre d'un des groupes constituants regroupés dans le groupe global GA. Cette communication MCData peut être une communication de type service données courtes SDS, distribution de fichier FD, ou connectivité IP IPCon. Le standard 3GPP MCData SDS (Short Data Service) comprend deux services :
- le service de messagerie, par exemple comprenant des échanges de données texte et
- Le service de « statut », qui comprend des échanges de « statut » entre des clients MCData. Par statut, on entend des codes courts. Par exemple, une valeur 1 peut indiquer un « départ sur site » de l'entité cliente, la valeur 2 peut indiquer une « arrivée sur site » de l'entité cliente, etc ... Certains métiers utilisent ces codes pour échanger et donner une information de situation opérationnelle, en plus des échanges par conversations voix.

Le procédé 1 selon un premier mode de réalisation de l'invention s'applique aussi bien pour des groupes de communication issus de regroupement de groupes de communication, ou pour des groupes de communication temporaires.

Comme montré aux Figures 2 et 4, la première entité cliente OC transmet, dans une étape 11, un message « SIP REQUEST 1 » au serveur participant OP de son groupe de communication G1. SIP est un protocole d'initiation de session (« Session Initiation Protocol » en anglais). La requête SIP REQUEST est soit une invitation SIP INVITE, définie par la RFC 3261, un message d'invitation d'un autre client à participer à une session, soit un message SIP MESSAGE, défini par la RFC 3428, qui permet l'échanges de messages « instantanés ». Selon l'invention, ce message comprend un champ d'en-tête <mcdata-request-uri> comprenant une information de groupe appelé, indiquant au serveur destinataire, c'est-à-dire au serveur participant OP, le groupe global de regroupement (« regroup ») au sein duquel l'entité cliente OC souhaite initier une communication MCData, c'est-à-dire le groupe global GA dans cet exemple.

La requête SIP REQUEST 1 comprend aussi un champ d'en-tête <associated-group-id> comprenant une information de groupe constituant, indiquant à quel groupe de communication compris dans le groupe global GA l'entité cliente OC appartient. Dans l'exemple présent, le groupe G1 de l'entité cliente OC compris dans le groupe global GA est appelé « constituent », appelé ainsi car il fait partie des deux groupes G1 et G2 « constituant » le groupe global GA.

Le procédé 1 selon un premier mode de réalisation de l'invention comprend une deuxième étape 12 mise en oeuvre par le serveur participant OP. Le serveur participant OP est un serveur appartenant au même groupe de communication G1 que l'entité cliente OC et gérant l'entité cliente OC au sein de ce groupe de communication G1. Le serveur participant OP transmet à l'étape 12, au serveur contrôleur C gérant le groupe de communication global GA, une requête SIP REQUEST 2 selon le protocole d'initiation de session SIP. Le serveur participant OP a connaissance du serveur contrôleur C par configuration statique ou dynamique.

La deuxième requête SIP REQUEST 2 comprend les mêmes champs d'entête que la première requête SIP REQUEST 1 et comprend en outre un champ d'entête « calling-user-id » comprenant une information indiquant l'identifiant de l'utilisateur originel, c'est-à-dire de l'entité cliente OC.

Dans ce premier mode de réalisation, la transmission est directe du serveur participant OP au serveur contrôleur C.

Le procédé 1 selon un premier mode de réalisation de l'invention comprend ensuite une étape 13 d'identification, par le serveur contrôleur C, des groupes de communication G1 et G2 constituant le groupe global de communication GA à partir de l'information de groupe appelé reçue dans la requête SIP REQUEST 2. Cette étape est représentée à la Figure 4 par le carré « D ».

A une étape 14 du procédé 1 selon un premier mode de réalisation de l'invention, le serveur contrôleur C du groupe global de communication GA invite chaque entité cliente de chaque groupe constituant le groupe global de communication à participer à la communication.

Cette invitation prend la forme d'une requête SIP REQUEST 4 à la Figure 4, la requête étant transmise, par le serveur contrôle C, à tous les serveurs non-contrôleurs NC et NC' gérant des groupes de communications G1 et G2 constituant le groupe global de communication GA. Cette requête SIP REQUEST 4 comprend le champ d'en-tête « calling-user-id » comprenant une information indiquant l'identifiant de l'utilisateur originel, c'est-à-dire de l'entité cliente OC, le champ d'en-tête <mcdata-request-uri> comprenant une information de groupe appelé, indiquant au serveur destinataire, c'est-à-dire à chaque serveur non-contrôleur NC, indiquant à quel groupe de communication compris dans le groupe global GA le serveur non-contrôleur NC destinataire de la requête appartient, et le champ d'en-tête <associated-group-id> comprenant une information de groupe d'appartenance, le groupe d'appartenance étant le groupe auquel appartient le serveur contrôleur C.

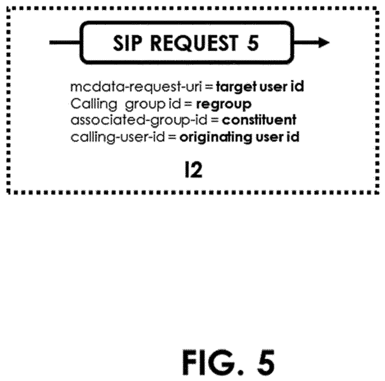

Cette invitation comprend aussi l'envoi d'une requête SIP REQUEST 5 représentée à la Figure 5, par chaque serveur non-contrôleur NC et NC' à chaque serveur participant OP et TP, pour que chaque serveur participant OP et TP puisse indiquer aux entités clientes qu'il gère de participer à la communication MCData, c'est-à-dire de recevoir un message de données courtes ou un fichier, envoyé par la première entité cliente OC. Cette cinquième requête SIP REQUEST 5 comprend :
- un champ d'en-tête <calling group id> comprenant une information de groupe appelant, l'information de groupe appelant indiquant le groupe global de communication GA,
- un champ d'en-tête <mcdata-request-uri> comprenant une information d'entité cliente destinataire, l'information d'entité cliente destinataire indiquant l'entité cliente destinataire de la requête SIP REQUEST 5 et appelée à participer à la communication MCData,
- un champ d'en-tête <associated-group-id> comprenant une information de groupe d'appartenance, le groupe d'appartenance étant le groupe auquel appartient le serveur non-contrôleur NC ou NC' envoyant cette requête SIP REQUEST 5,
- un champ d'en-tête <calling-user-id> comprenant une information d'entité cliente appelante, c'est-à-dire l'identité de l'entité cliente initiant la communication MCData.

Ce premier mode de réalisation peut être mis en oeuvre lorsque le groupe est paramétré pour des communications sans perte « lossless communication » comme défini dans la spécification technique TS 23.282 du 3GPP MCS, où les données doivent être distribuées à tous les membres d'un groupe même non affiliés et même en cas d'absence, en utilisant si nécessaire le stockage dans les « message stores » de ces utilisateurs.

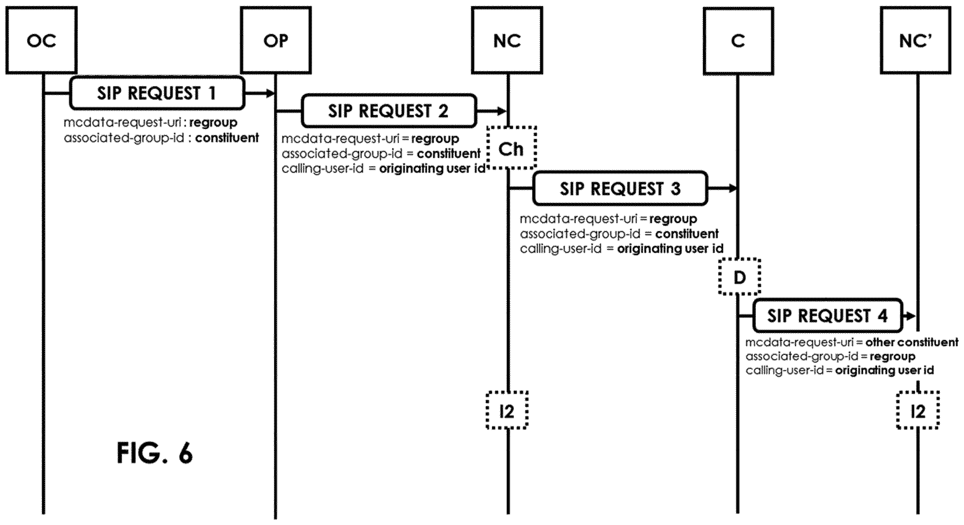

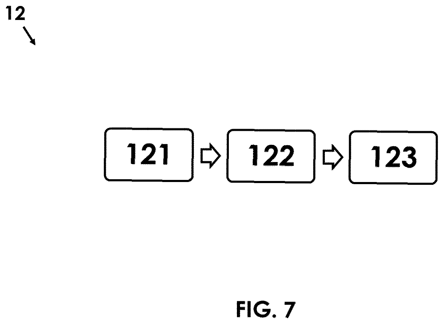

Dans un deuxième mode de réalisation, une vérification supplémentaire est réalisée, résultant aussi en une modification de l'étape 12 du procédé selon l'invention. Le procédé selon un deuxième mode de réalisation, représenté aux Figures 6 et 7, va maintenant être décrit.

Comme montré à la Figure 6, la première entité cliente OC transmet, dans une étape 11, une requête « SIP REQUEST 1 » au serveur participant OP de son groupe de communication G1. Selon l'invention, cette requête comprend un champ d'en-tête <mcdata-request-uri> comprenant une information de groupe appelé, indiquant au serveur destinataire, c'est-à-dire au serveur participant OP, le groupe global de regroupement (« regroup ») au sein duquel l'entité cliente OC souhaite initier une communication MCData, c'est-à-dire le groupe global GA dans cet exemple.

La requête SIP REQUEST 1 comprend aussi un champ d'en-tête <associated-group-id> comprenant une information de groupe constituant, indiquant à quel groupe de communication compris dans le groupe global GA l'entité cliente OC appartient. Dans l'exemple présent, le groupe G1 de l'entité cliente OC compris dans le groupe global GA est appelé « constituent », appelé ainsi car il fait partie des deux groupes G1 et G2 « constituant » le groupe global GA.

Le procédé selon un deuxième mode de réalisation de l'invention comprend une deuxième étape 12 mise en oeuvre par le serveur participant OP. Le serveur participant OP est un serveur appartenant au même groupe de communication G1 que l'entité cliente OC et gérant l'entité cliente OC au sein de ce groupe de communication G1. Cette étape 12 comprend trois sous-étapes, c'est-à-dire qu'une transmission est d'abord réalisée vers le premier serveur non-contrôleur NC, qui va alors vérifier que l'entité cliente est autorisée à réaliser la communication MCData au sein du groupe global, et qui va transmettre la requête au serveur contrôleur C.

L'étape 12 représentée à la figure 7 comprend une première sous-étape 121 de transmission, par le serveur participant OP, au premier serveur non-contrôleur NC, de la deuxième requête SIP REQUEST 2, comme représenté à la Figure 6.

Dans une sous-étape 122, le premier serveur non-contrôleur NC du groupe global de communication GA, en charge de la gestion du premier groupe de communication G1, réalise une vérification que la première entité cliente OC est autorisée à initier la communication « MCData » au sein du groupe global de communication GA à partir de l'information d'utilisateur originel comprise dans la deuxième requête REQUEST 2. Cela est représenté à la Figure 6 par la case « Ch ». Cette vérification peut par exemple comprendre la vérification que l'utilisateur est membre du groupe de communication G1. Cette étape de vérification peut en outre comprendre, dans une variante complémentaire, une vérification que la première entité cliente OC est bien affiliée au premier groupe de communication G1 à partir de l'information de groupe constituant et de l'information d'utilisateur originel. Dans une autre variante complémentaire, cette étape de vérification comprend la vérification que le premier groupe de communication G1 est compris dans le groupe global de communication GA à partir de l'information de groupe constituant et de l'information de groupe appelé.

Si la première entité cliente OC est autorisée à initier la communication « MCData », l'étape 12 comprend une sous-étape 123 de transmission, par le premier serveur non-contrôleur NC au serveur contrôleur C du groupe global de communication GA, d'une troisième requête SIP REQUEST 3, identique à la deuxième requête.

Le procédé selon le deuxième mode de réalisation de l'invention comprend ensuite une étape 13 d'identification, par le serveur contrôleur C, des groupes de communication G1 et G2 constituant le groupe global de communication GA à partir de l'information de groupe appelé reçue dans la requête SIP REQUEST 2. Cette étape est représentée à la Figure 6 par le carré « D ».

A une étape 14 du procédé selon le deuxième mode de réalisation de l'invention, le serveur contrôleur C du groupe global de communication GA invite chaque entité cliente de chaque groupe constituant le groupe global de communication à participer à la communication.

Cette invitation prend la forme d'une requête SIP REQUEST 4 à la Figure 6, la requête étant transmise, par le serveur contrôleur C, à tous les serveurs non-contrôleurs NC et NC' gérant des groupes de communications G1 et G2 constituant le groupe global de communication GA. Cette requête SIP REQUEST 4 comprend le champ d'en-tête « calling-user-id » comprenant une information indiquant l'identifiant de l'utilisateur originel, c'est-à-dire de l'entité cliente OC, le champ d'en-tête <mcdata-request-uri> comprenant une information de groupe appelé, indiquant au serveur destinataire, c'est-à-dire à chaque serveur non-contrôleur NC, indiquant à quel groupe de communication compris dans le groupe global GA le serveur non-contrôleur NC destinataire de la requête appartient, et le champ d'en-tête <associated-group-id> comprenant une information de groupe d'appartenance, le groupe d'appartenance étant le groupe auquel appartient le serveur contrôleur C.

Cette invitation comprend aussi l'envoi d'une requête SIP REQUEST 5 représentée à la Figure 5, par chaque serveur non-contrôleur NC et NC' à chaque serveur participant OP et TP, pour que chaque serveur participant OP et TP puisse indiquer aux entités clientes qu'il gère de participer à la communication MCData, c'est-à-dire de recevoir un message de données courtes ou un fichier, envoyé par la première entité cliente OC. Cette cinquième requête SIP REQUEST 5 comprend :
- un champ d'en-tête <calling group id> comprenant une information de groupe appelant, l'information de groupe appelant indiquant le groupe global de communication GA,
- un champ d'en-tête <mcdata-request-uri> comprenant une information d'entité cliente destinataire, l'information d'entité cliente destinataire indiquant l'entité cliente destinataire de la requête SIP REQUEST 5 et appelée à participer à la communication MCData,
- un champ d'en-tête <associated-group-id> comprenant une information de groupe d'appartenance, le groupe d'appartenance étant le groupe auquel appartient le serveur non-contrôleur NC ou NC' envoyant cette requête SIP REQUEST 5,
- un champ d'en-tête <calling-user-id> comprenant une information d'entité cliente appelante, c'est-à-dire l'identité de l'entité cliente initiant la communication MCData.

Ce deuxième mode de réalisation peut aussi être mis en oeuvre lorsque le groupe est paramétré pour des communications sans perte « lossless communication » comme défini dans la spécification technique TS 23.282 du 3GPP MCS, où les données doivent être distribuées à tous les membres d'un groupe même non affiliés et même en cas d'absence, en utilisant si nécessaire le stockage dans les « message stores » de ces utilisateurs.

Le procédé selon l'invention permet d'initier une communication MCData au sein d'un réseau 3GPP MCS, procédure inexistante et non prévue par le standard. Le procédé 1 selon l'invention permet une initiation de communication simple, rapide, ne comprenant pas d'étapes superflue, et permettant de vérifier :
- Que l'entité cliente est autorisée à initier une communication au sein du groupe global de regroupement,
- Que les groupes constituants appartiennent encore bien au groupe global de regroupement.

## Revendications

1. Procédé d'initiation, par une première entité cliente, d'une communication « MCData » de données courtes ou de distribution de fichier au sein d'un groupe global de communication regroupant au moins un premier groupe de communication et au moins un deuxième groupe de communication, au moins une deuxième entité cliente étant affiliée au deuxième groupe de communication, le procédé étant mis en oeuvre dans un réseau de communication selon le standard 3GPP MCS « 3rd Generation Partnership Program Mission-Critical System », le réseau comprenant au moins :
- la première entité cliente affiliée au premier groupe de communication,
- un serveur participant originel gérant la première entité cliente au sein du premier groupe de communication,
- un serveur contrôleur étant en charge de la gestion du groupe global de communication,
- au moins un premier serveur non-contrôleur du groupe global de communication étant en charge de la gestion du premier groupe de communication,
- au moins un deuxième serveur non-contrôleur du groupe global de communication étant en charge de la gestion du deuxième groupe de communication,
le procédé comprenant les étapes de :
- Transmission, par la première entité cliente au serveur participant, d'une première requête selon le protocole d'initiation de session SIP, la première requête comprenant :
∘ au moins un champ d'en-tête comprenant une information de groupe constituant, l'information de groupe constituant identifiant le premier groupe de communication, et
∘ au moins un champ d'en-tête comprenant une information de groupe appelé, l'information de groupe appelé identifiant le groupe global de communication,
- Transmission, par le serveur participant au premier serveur contrôleur, d'une deuxième requête comprenant les mêmes champs d'en-tête que la première requête et comprenant en outre au moins un champ d'entête comprenant l'information d'utilisateur originel, l'information d'utilisateur originel comprenant un identifiant de la première entité cliente,
- Identification, par le serveur contrôleur, des groupes de communication constituant le groupe global de communication à partir de l'information de groupe appelé,
- Invitation, par le serveur contrôleur du groupe global de communication, de chaque entité cliente de chaque groupe constituant le groupe global de communication à participer à la communication.

2. Procédé selon la revendication précédente selon lequel l'invitation par le serveur contrôleur du groupe global de communication de chaque entité cliente de chaque groupe constituant le groupe global de communication à participer à la communication comprend l'envoi d'une requête selon le protocole d'initiation de session « SIP » à chaque serveur non-contrôleur identifié de chaque groupe de communication identifié constituant le groupe global de communication, la requête comprenant :
- au moins un champ d'en-tête comprenant l'information d'utilisateur originel,
- au moins un champ d'en-tête comprenant l'information de groupe constituant,
- au moins un champ d'en-tête comprenant l'information de groupe appelé.

3. Procédé selon la revendication précédente comprenant en outre une étape de transmission, par chaque serveur participant de chaque groupe de communication identifié constituant le groupe global de communication, d'envoi d'une requête à chaque entité cliente affiliée au groupe de communication qu'il a à sa charge, la requête comprenant :
- au moins un champ d'en-tête comprenant une information d'entité cliente destinataire, l'information d'entité cliente comprenant l'identifiant de l'entité cliente destinataire affiliée au groupe de communication que le serveur non-contrôleur a à sa charge,
- au moins un champ d'en-tête comprenant l'information d'utilisateur originel,
- au moins un champ d'en-tête comprenant l'information de groupe constituant,
- au moins un champ d'en-tête comprenant l'information de groupe appelé.

4. Procédé selon l'une des revendications précédentes selon lequel la deuxième requête est envoyée par le serveur participant au premier serveur non-contrôleur, le procédé comprenant en outre les étapes de :
- Vérification, par le premier serveur non-contrôleur, que la première entité cliente est autorisée à initier la communication « MCData » au sein du groupe global de communication à partir de l'information d'utilisateur originel,
- Si la première entité cliente est autorisée à initier la communication « MCData », transmission, par le premier serveur non-contrôleur au serveur contrôleur, d'une troisième requête identique à la deuxième requête.

5. Procédé selon la revendication précédente **caractérisé en ce que** l'étape de vérification se base en outre sur l'information de groupe constituant et sur l'information de groupe appelé.

6. Procédé selon la revendication précédente **caractérisé en ce que** l'étape de vérification par le serveur non-contrôleur comprend en outre au moins la vérification que la première entité cliente est bien affiliée au premier groupe de communication à partir de l'information de groupe constituant et de l'information d'utilisateur originel.

7. Procédé selon l'une des revendications 4 à 6 **caractérisé en ce que** l'étape de vérification par le serveur non-contrôleur comprend en outre au moins la vérification que le premier groupe de communication est compris dans le groupe global de communication à partir de l'information de groupe constituant et de l'information de groupe appelé.

8. Procédé selon l'une quelconque des revendications précédentes selon lequel chaque requête selon le protocole d'initiation de session « SIP » est un message SIP « SIP MESSAGE » ou une invitation SIP « SIP INVITE ».

9. Réseau de communication selon le standard 3GPP MCS « 3rd Generation Partnership Program Mission-Critical System », le réseau comprenant un groupe global de communication formé par au moins un premier groupe de communication et au moins un deuxième groupe de communication, et :
- une première entité cliente affiliée au premier groupe de communication,
- un serveur participant originel gérant la première entité cliente au sein du premier groupe de communication,
- un serveur contrôleur en charge de la gestion du groupe global de communication,
- au moins un premier serveur non-contrôleur du groupe global de communication compris dans le réseau étant en charge de la gestion du premier groupe de communication,
- au moins un deuxième serveur non-contrôleur du groupe global de communication compris dans le réseau étant en charge de la gestion du deuxième groupe de communication,
le réseau de communication étant configuré pour mettre en oeuvre le procédé d'initiation de communication selon l'une quelconque des revendication précédentes.

10. Produit programme d'ordinateur comprenant des instructions qui conduisent le réseau selon la revendication 9 à exécuter les étapes du procédé selon l'une des revendications 1 à 8.

11. Support lisible par ordinateur, sur lequel est enregistré le produit programme d'ordinateur selon la revendication 10.
